Europäisches Patentamt

European Patent Office

Office européen des brevets

(11) Numéro de publication: **0 280 249**
**A1**

## (12) DEMANDE DE BREVET EUROPEEN

(21) Numéro de dépôt: 88102614.0

(51) Int. Cl.⁴: **A22C 11/12**

(22) Date de dépôt: 23.02.88

(30) Priorité: 26.02.87 FR 8702589

(43) Date de publication de la demande:
31.08.88 Bulletin 88/35

(84) Etats contractants désignés:
AT BE CH DE ES FR GB GR IT LI LU NL SE

(71) Demandeur: BOCA-OUEST
1 Place des Prairies
F-49300 Cholet(FR)

Demandeur: UNIGRAINS-UNION FINANCIERE
POUR LE DEVELOPPEMENT DE L'ECONOMIE
CEREALIERE
8, Avenue Président Wilson
F-75768 Paris Cédex(FR)

(72) Inventeur: Villemin, Daniel
131 Rue du Centre
F-94490 Ormesson(FR)

(74) Mandataire: Casalonga, Axel et al
BUREAU D.A. CASALONGA OFFICE JOSSE &
PETIT Morassistrasse 8
D-8000 München 5(DE)

(54) Procédé et installation de ficelage d'objets, notamment de produits à base de viande.

(57) Procédé et dispositif de ficelage, les objets (5) à ficeler étant placés sur des supports (6) subdivisés suivant plusieurs plans et mobiles entre plusieurs postes de ficelage (3,4) permettant d'effectuer sur les objets (5) reposant sur les supports (6) des ficelages dans plusieurs plans.

Application : notamment au ficelage de produits à base de viande, par exemple de paupiettes.

FIG.1

EP 0 280 249 A1

## Procédé et installation de ficelage d'objets, notamment de produits à base de viande.

La présente invention se rapporte à un procédé et une installation de ficelage d'objets, notamment d'objets de nature et/ou de consistance rendant leur manipulation difficile, ce ficelage consistant à réaliser, autour de chaque objet à ficeler, au moins deux opérations de cerclage à l'aide d'un lien dans des plans parallèles ou croisés, et à solidariser entre elles les extrémités du lien après au moins un cerclage.

Le ficelage de produits à base de viande, par exemple de paupiettes, de rôtis, de longes, s'effectue jusqu'à présent la plupart du temps manuellement, la solidarisation entre elles des extrémités de la ficelle, après chaque cerclage ou à la fin de tous les cerclages, s'effectuant par nouage.

Notamment pour des rôtis et des longes, on a également déjà proposé d'utiliser des filets tubulaires préfabriqués en fil élastique qui sont dilatés pour permettre l'introduction des rôtis ou longes et qui, après relâchement, se resserrent sur les rôtis ou longes pour les maintenir.

Le ficelage manuel avec nouage entraîne des frais de main d'oeuvre considérables. Par ailleurs, la tension avec laquelle la ficelle est nouée dépend de l'abileté de la personne chargée du ficelage puisque cette tension est appliquée à la ficelle au moment du nouage. Les filets tubulaires élastiques dont la mise en place sur les rôtis ou longes peut être automatisée, font l'objet d'une certaine réticence de la part des consommateurs, notamment du fait que lors du tranchage du rôti ou de la longe, les fils élastiques, lorsqu'ils sont sectionnés, se détendent brusquement, d'où un risque non négligeable d'éclaboussures. Par ailleurs, ces filets élastiques tubulaires ne conviennent que pour des produits relativement longs et non pas pour des produits moins allongés tels que des paupiettes, nécessitant un ficelage croisé.

Enfin, les procédés et dispositifs connus par exemple pour le ficelage de colis ou autres objets rigides ne sont pas applicables à des objets de nature et/ou de consistance rendant leur manipulation difficile, notamment les produits alimentaires à base de viande, en particulier des paupiettes.

La présente invention a pour objet un procédé et une installation de ficelage, permettant un ficelage automatique sans aucune intervention manuelle même sur des objets non rigides à manipulation difficile. L'invention a également pour objet un procédé et une installation de ficelage permettant un ficelage automatique, non croisé ou croisé, sur des objets allongés ou non allongés. L'invention a par ailleurs pour objet un procédé et une installation de ficelage produisant des cerclages de ficelle avec une tension constante, même sur des objets de consistance irrégulière.

Suivant le procédé conforme à l'invention de ficelage d'objets, notamment d'objets de nature et/ou de consistance rendant leur manipulation difficile, ce ficelage consistant à réaliser autour de chaque objet à ficeler au moins deux opérations de cerclage à l'aide d'un lien dans des plans parallèles ou croisés, et à solidariser entre elles les extrémités du lien après au moins un cerclage, on place chaque objet à ficeler sur un support mobile divisé en plusieurs parties séparées dans les plans de ficelage par des passages pour le lien de cerclage, et on déplace ledit support avec l'objet reposant sur ce dernier pour amener l'objet successivement dans plusieurs positions de ficelage par rapport à au moins un poste de ficelage fixe.

L'utilisation d'un support mobile adapté à la fois à l'objet à ficeler et aux opérations de ficelage à effectuer sur l'objet, permet de traiter sans problème des objets de manipulation difficile en raison de leur nature et/ou consistance, notamment des objets collants, gras, humides, mous tels que des produits à base de viande.

De préférence, on déplace le support portant l'objet à ficeler successivement entre plusieurs postes de ficelage fixes et on effectue à chacun de ces postes au moins un ficelage sur l'objet. Une application préférée du procédé conforme à l'invention concerne le ficelage de produits alimentaires, notamment à base de viande, l'objet à ficeler étant entouré d'une feuille de matière alimentaire (paupiettes) ou non, formant l'enveloppe extérieure du produit.

L'installation conforme à l'invention pour le ficelage d'objets, notamment d'objets de nature et/ou de consistance rendant leur manipulation difficile, ce ficelage consistant à réaliser autour de chaque objet à ficeler au moins deux opérations de cerclage à l'aide d'un lien dans des plans parallèles ou croisés, et à solidariser entre elles les extrémités du lien après au moins un cerclage, comprend avantageusement au moins un poste de ficelage fixe, au moins un support mobile pour l'objet à ficeler, ce support étant divisé en plusieurs parties séparées dans des plans correspondant aux plans dans lesquels l'objet doit être ficelé, et des moyens pour déplacer le support par rapport au(x) poste(s) de ficelage successivement dans plusieurs positions permettant les opérations de ficelage dans lesdits plans sur l'objet reposant sur le support.

De préférence le support comprend une plaque de base supportant lesdites parties par l'intermédiaire de piliers ou montants à distance au-dessus de la plaque de base de manière à per-

2

mettre le passage, dans les plans de ficelage, du lien de cerclage entre la plaque de base et l'objet reposant sur lesdites parties, et les moyens de déplacement du support agissent sur ladite plaque de base.

Suivant un mode de réalisation préféré, l'installation comprend plusieurs postes de ficelage et plusieurs supports, et des moyens de déplacement pour transférer lesdits supports successivement auxdits postes de ficelage.

Les différents supports sont avantageusement montés sur un même moyen de transport à avance pas à pas pour faire passer lesdits supports successivement aux différents postes de ficelage.

Chaque poste de ficelage comprend avantageusement, pour réaliser un cerclage de ficelle dans un plan vertical autour de l'objet à ficeler :

-un guide-ficelle mobile horizontalement en va-et-vient entre deux positions situées symétriquement de part et d'autre du support, sensiblement dans le plan de cerclage, au-dessus de l'objet reposant sur le support;

-des moyens de commande pour faire passer le guide-ficelle d'une position à l'autre au début de chaque cycle de ficelage;

-une réserve de ficelle alimentant le guide-ficelle;

-un dispositif tendeur de ficelle entre la réserve et le guide-ficelle, pour assurer une tension constante à la ficelle retirée de la réserve;

-deux têtes opposées de cerclage mobile simultanément en opposition suivant des trajectoires en arc, chacun entre une position haute dans laquelle la tête se trouve d'un côté du support au-dessus de l'objet reposant sur ce dernier, au voisinage de l'une des deux positions du guide-ficelle, et une position basse dans laquelle elle se trouve de l'autre côté du support, en dessous de l'objet reposant sur ce dernier, et inversement;

-une pince de ficelle prévue sur chaque tête de cerclage; et

-des moyens de commande alternée des pinces des deux têtes.

Suivant un mode de réalisation avantageux on utilise de la ficelle à base de matière thermoplastique pour ficeler les objets et on solidarise par soudage les extrémités de la ficelle après chaque cerclage. Dans ce cas, chaque poste de ficelage comprend de préférence des moyens de soudage mobiles en va-et-vient dans le plan de ficelage dudit poste de manière à pouvoir être rapprochés et éloignés de l'objet à ficeler, et des moyens de contre-appui pour les moyens de soudage, mobiles en va-et-vient de manière à pouvoir être engagés entre l'objet à ficeler et les moyens de soudage et en être retirés suivant une direction sensiblement perpendiculaire audit plan de ficelage. Le soudage peut se faire par tout moyen approprié tel que chauffage, application d'ultrasons etc. Bien qu'il soit préférable d'utiliser une matière sensiblement inextensible pour les ficelles, il peut être approprié dans certains cas d'utiliser une matière élastique qui assure un serrage plus facile du produit après cerclage.

Chaque poste de ficelage peut comprendre, en outre, des moyens de sectionnement de la ficelle au moyen d'une découpe ou par fusion, associés auxdits moyens de soudage, de manière à sectionner la ficelle entre la soudure et la réserve de ficelle.

Chaque poste de ficelage peut en outre comprendre avantageusement des moyens de blocage de la ficelle associés aux moyens de sou dage et aux moyens de sectionnement et coopérant avec les moyens de contre-appui pour bloquer les extrémités de la ficelle entre l'emplacement de soudure et les emplacements de sectionnement.

De préférence les moyens de commande des pinces des deux têtes de cerclage sont établis de manière que pour chaque cycle de ficelage, la pince de la tête qui, avant le début du cycle de ficelage, se trouve au voisinage du guide-ficelle, soit fermée pour pincer la ficelle et reste fermée jusqu'après le soudage et soit ouverte avant la remontée de cette tête en position haute, et que la pince de l'autre tête soit ouverte pendant la descente de cette tête en position basse et soit fermée pour pincer la ficelle avant le soudage, et reste fermée jusqu'après le soudage intervenant au cours du cycle de ficelage suivant.

De préférence, les deux têtes de cerclage à pince sont mobiles par pivotement de la position haute à la position basse et inversement, dans deux plans parallèles, et des moyens sont prévus pour déplacer les deux têtes, en position basse, en opposition transversalement auxdits plans dans un sens avant le soudage, pour croiser les deux brins de la ficelle cerclant l'objet et les moyens de contre-appui, et dans le sens opposé après le soudage.

De préférence, les moyens de soudage comprennent une tête de soudage entourée d'une tête annulaire de pression pour coincer les extrémités croisées de la ficelle de cerclage contre les moyens de contre-appui pendant le soudage, la tête de pression.étant de son côté entourée d'une tête annulaire de sectionnement par fusion.

En se référant au dessin annexé, on va décrire ci-après plus en détail, un mode de réalisation illustratif et non limitatif d'une installation de ficelage conforme à l'invention; sur le dessin :

la figure 1 est une vue d'ensemble d'une installation de formage et de ficelage de paupiettes avec trois postes de ficelage;

la figure 2 est une vue en plan d'un des supports de paupiettes utilisés dans l'installation de la figure 1;

la figure 3 est une vue des moyens de cerclage d'un poste de ficelage;

la figure 4 représente en coupe et à plus grande échelle une tête de cerclage et sa pince;

la figure 5 est une vue en élévation d'un guide-ficelle et de son alimentation en ficelle;

la figure 6 est une vue en plan de l'ensemble de la figure 5;

la figure 7 représente les moyens de soudage et de sectionnement ainsi que les moyens de contre-appui d'un poste de ficelage;

la figure 8 est une coupe à plus grande échelle de la partie supérieure des moyens de soudage et de sectionnement;

les figures 9 à 16 représentent schématiquement les différentes phases d'un cycle de ficelage d'une paupiette.

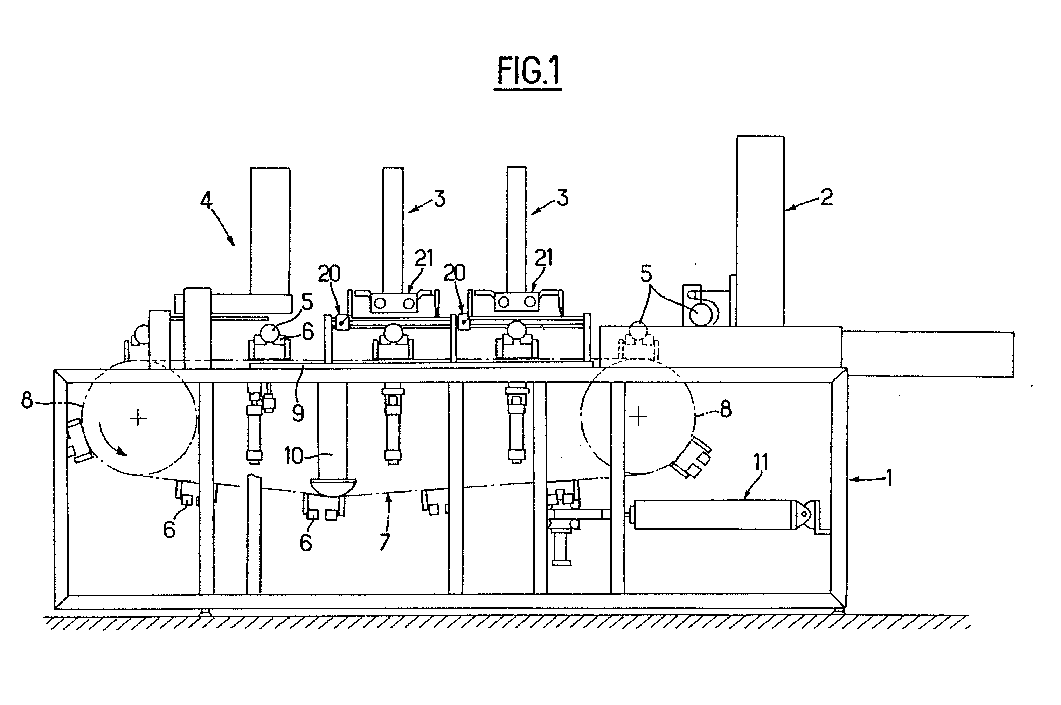

Selon la figure 1, une installation de formage et de ficelage de paupiettes comprend, sur un même bâti 1, un poste 2 de formage par roulage de paupiettes tel que décrit plus en détail dans une demande de brevet déposée le même jour par les mêmes déposants sous le titre "Procédé et dispositif de formage de produits mous et collants", deux postes de ficelage transversaux 3 ainsi qu'un poste de ficelage longitudinal 4.

Les paupiettes 5 formées au poste 2 sont reprises une à une par des supports 6 montés sur deux chanes sans fin 7 parallèles, passant sur deux doubles roues à chaîne 8. Le brin supérieur des chanes 7, soutenu par une table 9, s'étend en ligne droite entre les deux roues 8 et 9, de la sortie du poste de formage 2 à travers les trois postes de ficelage 3 et 4, alors que le brin inférieur des chaînes 7 est soumis à l'action d'un tendeur 10. Les chaînes 7 sont avancées pas à pas, par une commande d'avancement 11, par exemple à vérin pneumatique, la longueur de chaque pas correspondant à la distance uniforme entre les supports 6.

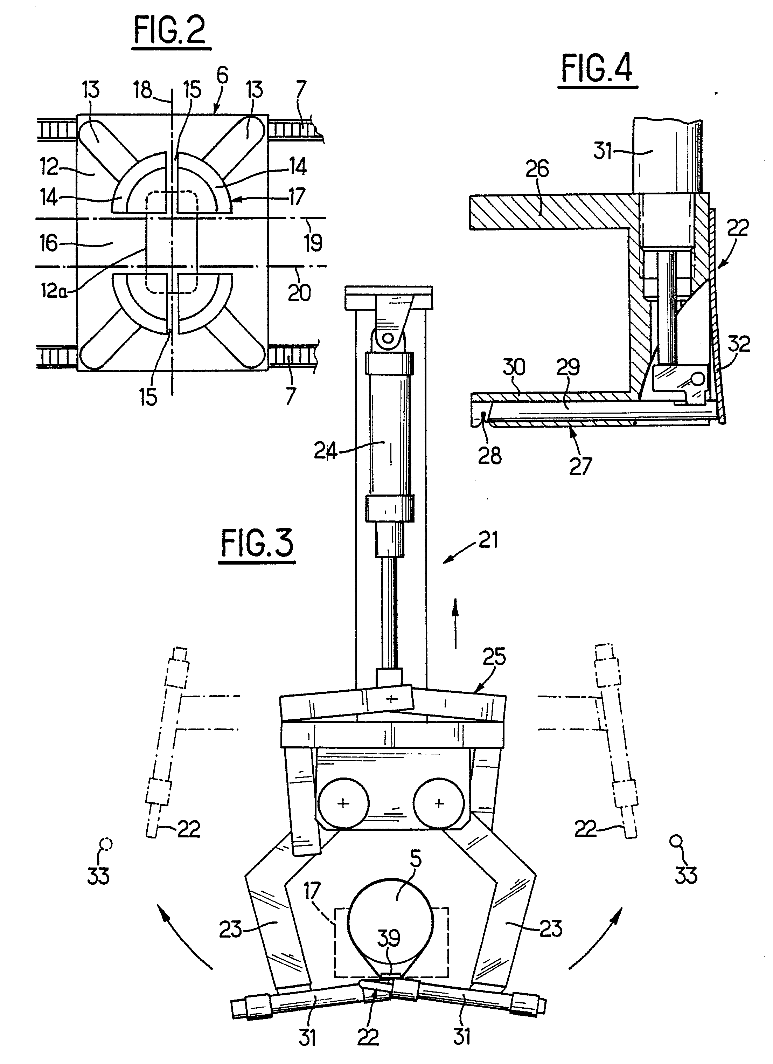

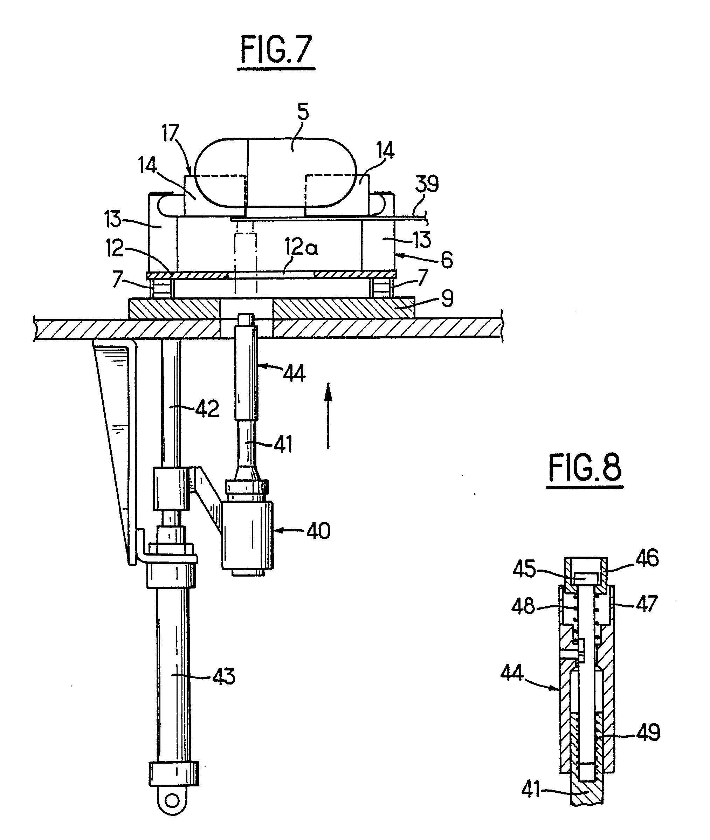

Comme le montrent les figures 2 et 7, chaque support 6 comprend une plaque 12 fixée sur les deux chanes 7. La plaque 12 qui est munie d'une ouverture centrale 12a dont la fonction apparaîtra par la suite supporte, par l'intermédiaire de quatre piliers 13, quatre parties de moule 14 identiques constituant chacun un quart de moule. Les quatre parties de moule 14 sont séparées par un intervalle 15 de largeur réduite dans un plan vertical perpendiculaire aux chaînes 7 et par un intervalle 16 de largeur accrûe dans un plan vertical parallèle aux chaînes 7. Les quatre parties de moule 14 se complètent ainsi sous la forme d'un moule 17 dont la forme est adaptée à la forme de la paupiette à recevoir.

L'intervalle 15 est destiné à permettre un ficelage, à savoir un ficelage longitudinal de la paupiette dans un plan vertical 18, tandis que l'intervalle 16 de largeur accrûe est destiné à permettre deux ficelages transversaux de la paupiette, dans deux plans verticaux 19, 20.

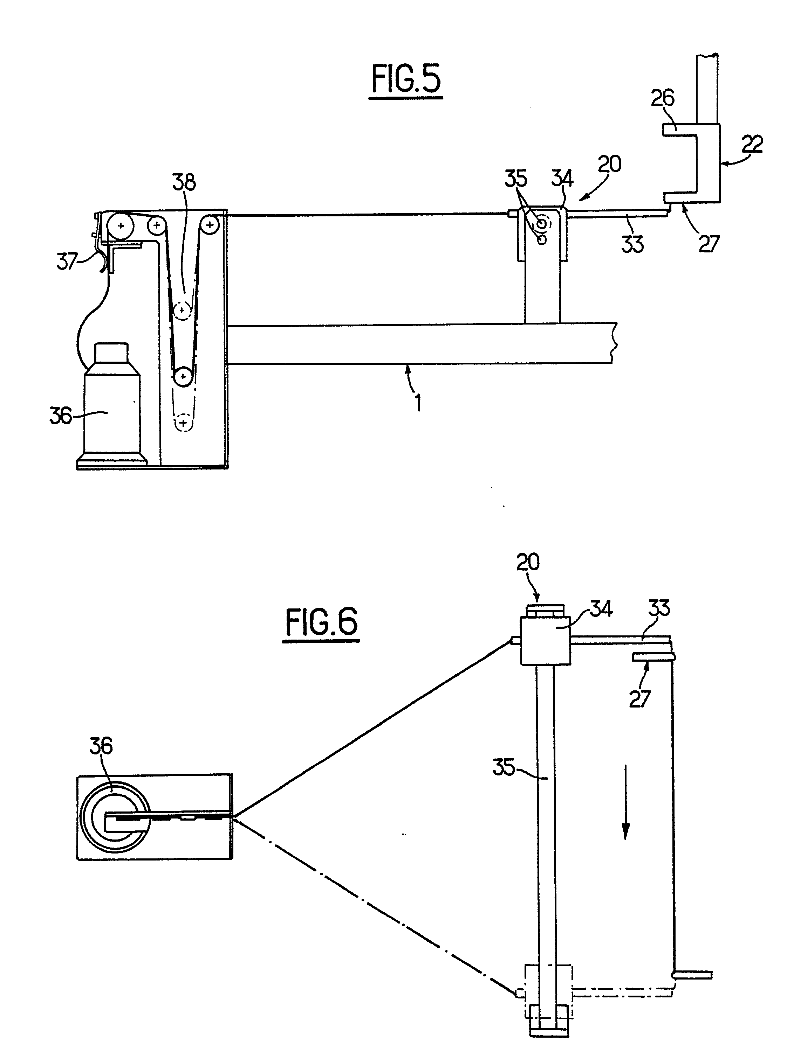

Selon les figures 3 à 6, chaque poste de ficelage comprend un dispositif 20 de positionnement de ficelle (figures 5 et 6) et un dispositif 21 de cerclage (figures 3 et 4), coopérant l'un avec l'autre.

Le dispositif de cerclage 21 comprend deux têtes de cerclage 22 montées sur deux bras oscillants 23 commandés par un vérin commun 24 par l'intermédiaire d'un système de bielles 25, de telle manière que les deux têtes 22 puissent être amenées suivant des trajets en arc de cercle d'une position haute indiquée en traits mixtes sur la figure 3, dans laquelle les deux têtes 22 se trouvent au-dessus de la paupiette 5 contenue dans le moule 17, de part et d'autre de la paupiette, dans une position basse dans laquelle les deux têtes 22 sont passées en dessous du moule 17, entre ce dernier et la plaque de support 12, en croisant leurs mouvements, c'est-à-dire que la tête 22 de gauche en position haute se trouve à droite en position basse, et inversement.

Chaque tête 22 comporte une branche de guidage 26 et une branche formant pince 27. La pince est constituée par une encoche 28 ménagée dans un fourreau 30. Une tige 29 montée coulissante dans le fourreau 30 est mobile en translation dans un sens sous l'action d'un vérin 31, et dans le sens opposé sous l'action d'un ressort 32 en vue de coincer une ficelle engagée dans l'encoche 28 du fourreau 30.

Tel que cela apparaît notamment sur la figure 6, les deux pinces 27 font saillie en sens opposés sur les deux têtes 22 qui sont disposées et se déplacent, lors du pivotement des bras 23, tout comme ces derniers, dans deux plans parallèles.

Des moyens non représentés, par exemple des vérins pneumatiques, sont prévus pour déplacer les deux bras 23 transversalement à leurs plans de pivotement, dans un but qui apparaîtra plus loin.

Le dispositif 20 de positionnement de ficelle (figures 5 et 6) comprend un guide-ficelle 33 constitué par un tube horizontal fixé à un coulisseau 34 mobile en va-et-vient, sous l'action d'un vérin pneumatique à double effet, non représenté, sur deux tiges de guidage 35 horizontales s'étendant parallèlement au plan du ficelage à réaliser. Le tube guide-ficelle 33 est alimenté en ficelle à partir d'une bobine 36 par l'intermédiaire d'un tendeur 37, de préférence réglable, et d'un système de compensation de mou 38.

Dans les deux positions extrêmes du tube guide-ficelle 33, ce dernier se trouve légèrement à l'extérieur et en dessous des têtes 22 en position haute (voir figures 3, 5 et 6).

Selon les figures 3, 7 et 8, chaque poste de ficelage 3, 4 comprend, par ailleurs, une lame 39 de contre-appui mobile, sous l'action d'une commande non représentée, par exemple d'un vérin pneumatique double effet, en dessous du moule 17, le plus près possible de la paupiette 5 contenue dans le moule, entre une position de retrait dans laquelle la lame 39 est complètement dégagée de la trajectoire des supports 6, et une position d'engagement (figure 7) dans laquelle la lame 39 est engagée, en dessous du moule 17 se trouvant en position de ficelage, jusqu'au-delà du plan dans lequel le ficelage doit être exécuté à ce poste. La lame 39 sert de contre-appui à une tête de soudage décrite ci-après.

Il y a lieu de noter que sur les deux postes de ficelage transversaux 3, les lames de contre-appui 39 mobiles dans le sens longitudinal des paupiettes 5, c'est-à-dire transversalement aux chaînes 7, effectuent un mouvement rectiligne de va-et-vient perpendiculairement au plan du dessin. Par contre, au poste de ficelage longitudinal 4, la lame 39 doit être engagée et retirée par un mouvement de pivotement autour d'un axe vertical, afin de pouvoir être retirée de la trajectoire des moules 17. La lame 39 effectue, en outre, un léger mouvement de montée à la fin de son mouvement d'engagement et un léger mouvement de descente au début de son mouvement de retrait.

Chaque poste de ficelage 3, 4 comprend, en outre, un dispositif de soudage et de sectionnement 40 illustré par les figures 7 et 8. Ce dispositif 40 comprend un support 41 mobile verticalement en va-et-vient sur deux tiges de guidage 42 sous l'action d'un vérin pneumatique 43 à double effet.

Le support 41 porte une unité de soudage, de pression et sectionnement 44 comprenant, selon la figure 8, une tête centrale de soudage 45 entourée d'une tête annulaire de pression 46 elle-même entourée d'une tête annulaire de sectionnement 47. La tête de soudage 45 se présente sous la forme d'une tige verticale dont l'extrémité inférieure est montée coulissante verticalement dans le support 41 et dont l'extrémité supérieure libre est conformée en tronçon de diamètre accru formant la tête de soudage proprement dite. La tête de sectionnement 47 se présente sous la forme d'un manchon entourant la tête de soudage 45 et fixée sur l'extrémité supérieure du support 41. La tête de pression 46 est constituée par une pièce en forme de godet à fond percé, ce godet étant monté coulissant sur la tige de la tête de soudage 45 en étant sollicité vers le haut, contre la section d'extrémité de la tête de soudage 45, par un ressort de compression 48 intercalé entre la tête de sectionnement 47 et la face inférieure de la tête de pression 46.

Le diamètre extérieur de la tête de sectionnement 47 est supérieur à cette dimension de la lame de contre-appui 39.

Les deux têtes de soudage 45 et de sectionnement 47 sont chauffées électriquement par une résistance de chauffage commune 49 avec régulation de la température de la tête de soudage 45 par un thermocouple. Par l'utilisation de matériaux ayant des conductibilités thermiques différentes pour les deux têtes 45 et 47 et par le choix de la forme de ces deux têtes, il est possible de faire en sorte que lorsque la tête de soudage 45 présente une température optimale pour le soudage, la tête de sectionnement présente une température plus élevée permettant un sectionnement par fusion. On comprendra bien entendu que le sectionnement de la ficelle pourrait également être fait par d'autres moyens, par exemple par découpe.

Comme le montre la figure 8, lorsque l'unité de soudage 44 est au repos, le bord supérieur de la tête de pression 46 se trouve au-dessus du bord supérieur de la tête de soudage 45, lui-même situé au-dessus du bord supérieur de la tête de sectionnement 47.

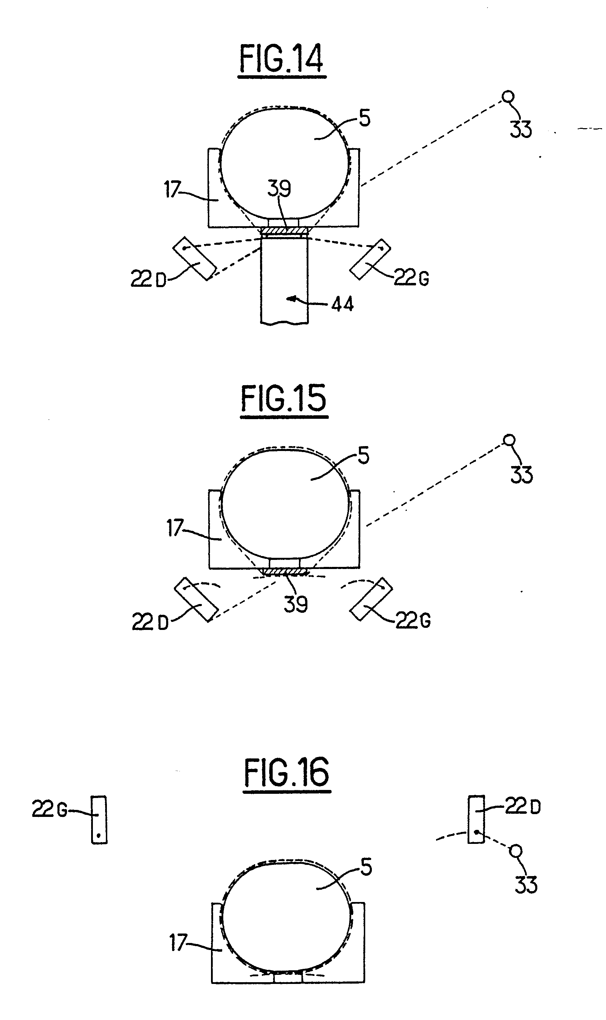

Lorsque l'unité de soudage 44 est appliquée, sous l'action du vérin 43, depuis le bas à travers l'ouverture 12a de la plaque 12, contre la lame de contre-appui 39 engagée en dessous de la paupiette 5 à ficeler reposant dans le moule 17, c'est d'abord la tête de pression 46 qui s'appuie contre la lame 39, de sorte que le ressort 48 se trouve comprimé avant que la tête de soudage 45 s'appuie également contre la lame 39. Dans cette position la tête de sectionnement 47 se trouve à très faible distance en dessous de la lame 39. (voir figure 14).

Sur les figures, on a représenté l'unité de soudage 44 placée au-dessous des supports 6. Une telle disposition, avantageuse dans certains cas, peut cependant présenter des inconvénients, en particulier si des parcelles de produits tombent sur la tête de soudage risquant ainsi d'altérer son fonctionnement. On peut donc également disposer l'unité de soudage en position supérieure, audessus des supports 6. La position d'éventuelles lames de contre-appui 39 nécessaires est alors également inversée.

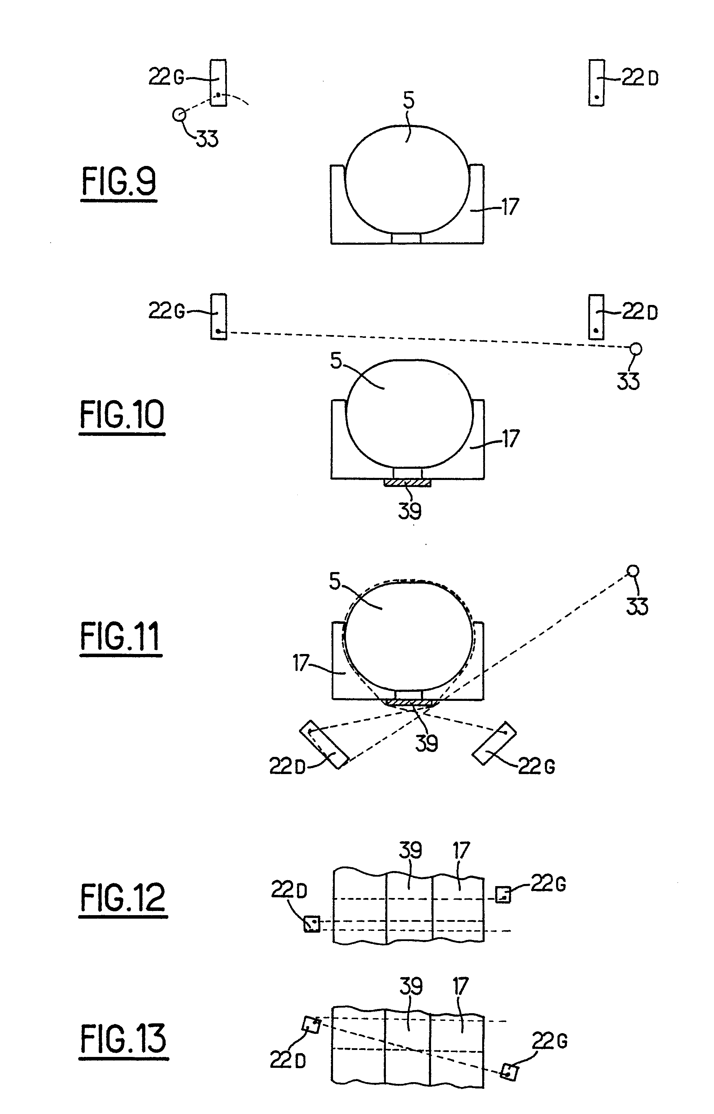

En se référant aux figures 9 à 16, on va décrire ci-après un cycle complet de ficelage à l'un quelconque des postes de ficelage 3, 4.

Le cycle de ficelage commence lorsqu'une paupiette 5 contenue dans son moule 17 a été amenée à l'un des postes de ficelage. Les deux têtes de cerclage 22 (référencées 22 G pour la tête de gauche et 22 D pour la tête de droite) se trouvent en position haute. Le tube guide-ficelle 33 se trouve par exemple dans la position de gauche, proche de la tête de guidage gauche 22 G, et l'extrémité libre de la ficelle sortant de ce tube est pincée dans la pince de la tête gauche 22 G (figure 9).

Le tube guide-ficelle 33 est déplacé de gauche à droite au-delà et en dessous de la tête droite 22 D, de sorte qu'une longueur correspondante de ficelle retirée de la bobine 36 est tendue au-dessus de la paupiette 5 entre la pince de la tête gauche 22 G et le tube 33 (figure 10).

Simultanément à la suite de ce déplacement du tube 33, la lame de contre-appui 39 est avancée de la position de retrait à la position d'engagement en dessous du moule 17.

Dans la phase suivante, les deux têtes de cerclage 22 G et 22 D sont amenées en opposition en position basse, de sorte que la pince de gauche 22 G se retrouve à droite et la pince de droite 22 D à gauche, en dessous du moule 17. Pendant ce mouvement de descente, les deux têtes 22 G et 22 D enroulent la ficelle autour de la paupiette et de la lame de contre-appui 39, la tête 22 G du fait que l'extrémité libre de la ficelle se trouve pincée dans cette tête et la tête 22 D sans pincement de la ficelle, simplement du fait que la ficelle se trouve sur la trajectoire de la tête 22 D (figure 11).

La figure 12 qui est une vue de dessous de la figure 11 montre que les deux brins inférieurs de la ficelle se trouvent dans deux plans parallèles, du fait que les deux têtes 22 G et 22 D évoluent dans deux plans parallèles lors de leur descente. Par conséquent, les deux brins de la ficelle sont disposés côte à côte en dessous de la lame de contre-appui 39.

Lorsque les deux têtes 22 D et 22 G sont arrivées en position basse, on ferme la pince 22 D de sorte que la ficelle se trouve alors coincée dans les deux têtes 22 G et 22 D.

On déplace ensuite les deux pinces 22 G et 22 D en opposition transversalement à leurs plans de pivotement, de manière à croiser en dessous de la lame de contre-appui 39 les deux brins de ficelle pincés par les deux têtes 22 G, 22 D (figure 13).

Pendant la phase suivante, on applique l'unité de soudage 44 contre la face inférieure de la lame de contre-appui 39, à l'endroit du croisement des brins de ficelle. La tête de pression 46 s'applique en premier contre la lame 39, pour bloquer les deux brins de ficelle contre la lame 39. Ensuite, la tête de soudage 45 chauffée s'applique contre les brins croisés de la ficelle pour les souder l'un à l'autre. Enfin, la tête de sectionnement 47 également chauffée entre en contact avec les deux brins de ficelle pincés entre les têtes de guidage 22 G, 22 D et la tête de pression 46, et les sectionne par fusion de part et d'autre de la lame 39 (figure 14).

De ce fait, lors du retrait de l'unité de soudage 44 de la lame de contre-appui 39, la paupiette 5 et la lame 39 sont entourées d'un cercle de ficelle fermé par soudage, séparé de la ficelle venant du tube guide-ficelle 33 et dont l'extrémité reste pincée par la tête 22 D (figure 15).

On retire alors la lame de contre-appui 39, de sorte que le cercle de ficelle n'entoure plus que la paupiette 5, on ouvre la pince de la tête gauche 22 G pour libérer le bout de ficelle qui s'y trouve encore pincé, mais en maintenant fermée la pince de la tête droite 22 D, on ramène les deux têtes 22 G et 22 D en sens opposé dans leurs plans de pivotement et on les relève par pivotement en position haute (figure 16). Le mou produit dans la ficelle par le mouvement de montée de la tête 22 D pinçant l'extrémité de la ficelle, jusqu'au voisinage du tube guide-ficelle 33 occupant la position de droite, se trouve absorbé par le dispositif 38 (figure 5).

Après enlèvement, du poste de ficelage, de la paupiette 5 ficelée, contenue dans son moule 17, et mise en place, au même poste de ficelage, d'un autre moule portant une nouvelle paupiette à ficeler, ce poste de ficelage est prêt pour un nouveau cycle de ficelage qui diffère du cycle décrit uniquement par le fait qu'au début du cycle, la ficelle est amenée par le tube 33 de droite à gauche au-dessus de la paupiette et reste pincée dans la tête de droite 22 D jusqu'après soudage, pour être reprise ensuite par la pince de gauche 22 G.

Il convient de noter que le mode de réalisation illustré par le dessin et décrit ci-dessus n'a été donné qu'à titre d'exemple et que de nombreuses modifications et variantes sont possibles dans le cadre de l'invention.

Ainsi, l'invention est applicable au ficelage de produits alimentaires autres que des paupiettes, par exemple des rôtis ou des longes qui peuvent n'exiger que des ficelages transversaux. Bien entendu, le support du produit à ficeler de forme adaptée ne présente dans ce cas que des fentes transversales pour permettre ces ficelages.

Par ailleurs, l'invention est applicable également à des objets autres que des produits alimentaires, ses avantages étant particulièrement intéressants lorsque les objets à ficeler ont une nature et/ou consistance rendant leur manipulation difficile ou délicate.

Notamment en cas de ficelage de produits alimentaires, il est avantageux que les supports 6 (moules 17) soient fixés de façon facilement amovible sur les moyens de transport (chaînes 7 ou moyens équivalents).

L'utilisation de ficelle thermoplastique est particulièrement avantageux dans le cas de produits alimentaires devant subir une cuisson et/ou un rôtissage à l'état ficelé, comme pour des paupiettes ou des rôtis. En effet, pour enlever la ficelle après cuisson ou rôtissage, il suffit d'exercer un effcrt sur les soudures de la ficelle, qui lâchent alors sans qu'il soit nécessaire de couper la ficelle.

La ficelle peut, de préférence, être constituée dans ce cas d'une âme de coton entourée d'une enveloppe de matière thermoplastique, par exemple de polyéthylène alimentaire.

Toutefois, au lieu de solidariser les extrémités de la ficelle de cerclage par soudage, il est également possible de le faire par nouage, en utilisant par exemple des mécanismes noueurs montés à la place des unités de soudage 44.

## Revendications

1. Procédé de ficelage d'objets, notamment d'objets de nature et/ou de consistance rendant leur manipulation difficile, ce ficelage consistant à réaliser autour de chaque objet à ficeler au moins deux opérations de cerclage à l'aide d'un lien dans des plans parallèles ou croisés, et à solidariser entre elles les extrémités du brin après au moins un cerclage, caractérisé par le fait qu'on place chaque objet à ficeler sur un support mobile divisé en plusieurs parties séparées dans les plans de ficelage par des passages pour le lien de cerclage, et qu'on déplace ledit support avec l'objet reposant sur ce dernier pour amener l'objet successivement dans plusieurs positions de ficelage par rapport à au moins un poste de ficelage fixe.

2. Procédé suivant la revendication 1, caractérisé par le fait qu'on déplace ledit support successivement entre plusieurs postes de ficelage fixes et qu'on effectue à chacun de ces postes au moins un ficelage sur l'objet.

3. Application du procédé suivant la revendication 1 ou 2 au ficelage de produits alimentaires, notamment à base de viande, l'objet étant entouré d'une feuille de matière alimentaire ou non, formant l'enveloppe extérieure du produit.

4. Installation pour le ficelage d'objets, notamment d'objets de nature et/ou de consistance rendant leur manipulation difficile, ce ficelage consistant à réaliser autour de chaque objet à ficeler au moins deux opérations de cerclage à l'aide d'un lien dans des plans parallèles ou croisés, et à solidariser entre elles les extrémités du lien après au moins un cerclage, caractérisée par le fait qu'elle comprend au moins un poste de ficelage (3,4) fixe, au moins un support (6, 17) mobile pour l'objet (5) à ficeler, ce support étant divisé en plusieurs parties (14) séparées dans des plans correspondant aux plans dans lesquels l'objet doit être ficelé, et des moyens (7) pour déplacer le support par rapport au(x) poste(s) de ficelage successivement dans plusieurs positions permettant les opérations de ficelage dans lesdits plans sur l'objet reposant sur le support.

5. Installation suivant la revendication 4, caractérisée par le fait que le support (6, 17) comprend une plaque de base (12) supportant lesdites parties (14) par l'intermédiaire de piliers ou montants (13) à distance au-dessus de la plaque de base de manière à permettre passage, dans les plans de ficelage, du lien de cerclage entre la plaque de base (12) et l'objet (5) reposant sur lesdites parties (14), et que les moyens de déplacement (7) du support agissent sur ladite plaque de base.

6. Installation suivant la revendication 4 ou 5, caractérisée par le fait qu'il comprend plusieurs postes de ficelage (3, 4) et plusieurs supports (6), et des moyens de déplacement (17) pour transférer lesdits supports successivement auxdits postes de ficelage.

7. Installation suivant la revendication 6, caractérisée par le fait que les différents supports (6) sont montés sur un même moyen de transport (7) à avance pas à pas pour faire passer lesdits supports successivement aux différents postes de ficelage.

8. Installation suivant l'une quelconque des revendications 4 à 7, caractérisée par le fait que chaque poste de ficelage comprend, pour réaliser un cerclage de ficelle dans un plan vertical autour de l'objet à ficeler :

-un guide-ficelle (33) mobile horizontalement en va-et-vient entre deux positions situées symétriquement de part et d'autre du support (6, 17), sensiblement dans le plan de cerclage, au-dessus de l'objet (5) reposant sur le support :

-des moyens de commande pour faire passer le guide-ficelle (33) d'une position à l'autre au début de chaque cycle de ficelage;

-une réserve de ficelle (36) alimentant le guide-ficelle (33);

-un dispositif tendeur de ficelle (37) entre la réserve (36) et le guide-ficelle (33), pour assurer une tension constante à la ficelle retirée de la réserve;

-deux têtes opposées de cerclage (22) mobiles simultanément en opposition suivant des trajectoires en arc, chacune entre une position haute dans laquelle la tête se trouve d'un côté du support au-dessus de l'objet reposant sur ce dernier, au voisinage de l'une des deux positions du guide-ficelle, et une position basse dans laquelle elle se trouve de l'autre côté du support, en dessous de l'objet reposant sur ce dernier, et inversement;

-une pince de ficelle (27) prévue sur chaque tête de cerclage; et

-des moyens (31) de commande alternée des pinces (27) des deux têtes (22).

9. Installation suivant l'une quelconque des revendications 6 à 8, caractérisée par le fait que chaque poste de ficelage comprend des moyens de soudage (40) mobiles en va-et-vient dans le plan de ficelage dudit poste de manière à pouvoir être rapprochés et éloignés de l'objet à ficeler, et des moyens de contre-appui (39) pour les moyens de soudage, mobiles en va-et-vient de manière à pouvoir être engagés entre l'objet à ficeler et les moyens de soudage et en être retirés suivant une direction sensiblement perpendiculaire audit plan de ficelage.

10. Installation suivant la revendication 9, caractérisée par le fait que chaque poste de ficelage comprend, en outre, des moyens (47) de sectionnement de la ficelle disposés de manière à sectionner la ficelle entre la soudure et la réserve de ficelle (36).

11. Installation suivant la revendication 10, caractérisée par le fait que les moyens de sectionnement agissent par fusion de la ficelle et sont associés aux moyens de soudage.

12. Installation suivant les revendications 10 ou 11, caractérisée par le fait que chaque poste de ficelage comprend, en outre, des moyens (46) de blocage de la ficelle associée aux moyens de soudage (45) et aux moyens de sectionnement (47) et coopérant avec les moyens de contre-appui (39) pour bloquer les extrémités de la ficelle entre l'emplacement de soudure et les emplacements de sectionnement.

13. Installation suivant l'une quelconque des revendications 8 à 12, caractérisée par le fait que lesdits moyens (31) de commande des pinces (27) des deux têtes de cerclage (22) sont établis de manière que pour chaque cycle de ficelage, la pince de la tête qui, avant le début du cycle de ficelage, se trouve au voisinage du guide-ficelle, soit fermée pour pincer la ficelle et reste fermée jusqu'après le soudage et soit ouverte avant la remontée de cette tête en position haute, et que la pince de l'autre tête soit ouverte pendant la descente de cette tête en position basse et soit fermée pour pincer la ficelle avant le soudage, et reste fermée jusqu'après le soudage intervenant au cours du cycle de ficelage suivant.

14. Installation suivant l'une quelconque des revendications 9 à 13, caractérisée par le fait que les deux têtes de cerclage (22) sont mobiles par pivotement de la position haute à la position basse et inversement dans deux plans parallèles et que des moyens sont prévus pour déplacer les deux têtes en position basse en opposition transversalement auxdits plans, dans un sens avant le soudage pour croiser les deux brins de la ficelle cerclant l'objet et les moyens de contre-appui et dans le sens opposé après le soudage.

15. Installation suivant l'une quelconque des revendications 9 à 12, caractérisée par le fait que les moyens de soudage comprennent une tête de soudage (45) entourée d'une tête annulaire de pression (46) pour coincer les extrémités croisées de la ficelle contre les moyens de contre-appui (39), la tête de pression étant à son tour entourée d'une tête annulaire (37) de sectionnement par fusion.

# FIG.1

0 280 249

0 280 249

# FIG.2

# FIG.4

# FIG.3

0 280 249

## FIG.5

## FIG.6

## FIG.7

## FIG.8

FIG.9

FIG.10

FIG.11

FIG.12

FIG.13

## FIG.14

## FIG.15

## FIG.16

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-1 539 219  (BUNN)<br>* Résumé, point 1 *<br>--- | 1,7 | A 22 C  11/12 |
| A | EP-A-0 116 351  (LANG)<br>--- | | |
| A | GB-A-  650 162  (BUNN)<br>--- | | |
| A | US-A-3 019 722  (GUM)<br>----- | | |

DOMAINES TECHNIQUES RECHERCHES (Int. Cl.4)

A 22 C
B 65 B

Le présent rapport a été établi pour toutes les revendications

| Lieu de la recherche | Date d'achèvement de la recherche | Examinateur |
|---|---|---|
| LA HAYE | 19-05-1988 | DE LAMEILLIEURE D. |

EPO FORM 1503 03.82 (P0402)